(19) Europäisches Patentamt / European Patent Office / Office européen des brevets

(11) **EP 4 340 149 A1**

(12) **EUROPEAN PATENT APPLICATION**
published in accordance with Art. 153(4) EPC

(43) Date of publication:
**20.03.2024  Bulletin 2024/12**

(21) Application number: **21947394.9**

(22) Date of filing: **28.06.2021**

(51) International Patent Classification (IPC):
**H02H 3/08** *(2006.01)*  **H01H 33/42** *(2006.01)*

(52) Cooperative Patent Classification (CPC):
**H01H 33/42; H02H 3/08**

(86) International application number:
**PCT/CN2021/102738**

(87) International publication number:
**WO 2023/272430 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Digital Power Technologies Co., Ltd.**
**Shenzhen, Guangdong 518043 (CN)**

(72) Inventors:
• **BISSAL, Ara**
  **Shenzhen, Guangdong 518129 (CN)**
• **STIEDL, Andreas**
  **Shenzhen, Guangdong 518129 (CN)**
• **ZHAO, Fugao**
  **Shenzhen, Guangdong 518129 (CN)**
• **WANG, Shuai**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **CIRCUIT BREAKER AND POWER SUPPLY SYSTEM**

(57)    This application provides a circuit breaker and a power supply system. The circuit breaker is disposed between a direct current power source and a load, the circuit breaker includes a first coil, a second coil, a switch unit, and a driver, and the switch unit and the driver form a linkage connection. The direct current power source is coupled to a first end of the first coil and a first end of the second coil, both a second end of the first coil and a second end of the second coil are coupled to one end of the switch unit, and another end of the switch unit is coupled to the load. Inductive reactance of the first coil is less than inductive reactance of the second coil. When a current growth rate of the first coil is greater than a preset threshold, the first coil generates a magnetic field, and the driver drives, under induction of the magnetic field, the switch unit to be turned off. The circuit breaker in this application uses a different structure, and drives the switch unit to implement breaking by using a repulsion force between a magnetic field generated by a coil and the driver, so that a breaking speed is fast, and a switch in the circuit breaker has a long service life and good reliability.

FIG. 3

## Description

## TECHNICAL FIELD

This application relates to the field of power supply technologies, and in particular, to a circuit breaker and a power supply system.

## BACKGROUND

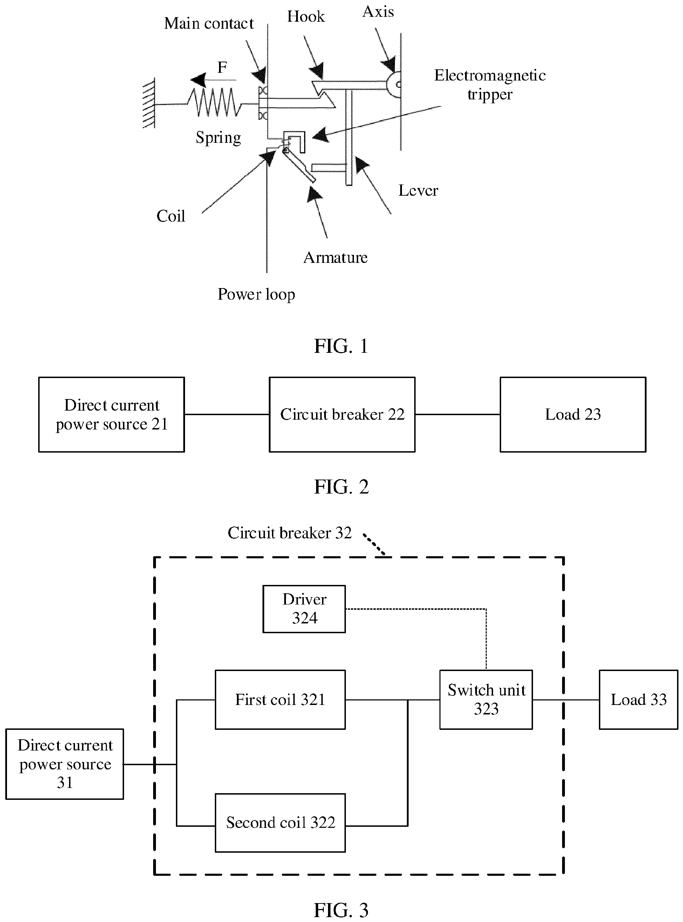

In a power supply system, a circuit breaker needs to be used to implement functions such as power distribution and protection. Currently, the power supply system uses a circuit breaker shown in FIG. 1. When a current in a power loop changes instantaneously, a coil connected in series to the power loop generates a magnetic field and attracts an armature. In a process of attracting the armature, the armature hits a lever to release a hook. At this time, a spring is restored from a stretching state, and pulls a main contact to implement a breaking function. This circuit breaker has many linkage apparatuses in a breaking process, for example, the spring, the hook, the lever, and the armature; and consequently linkage time is long, and a breaking speed is slow.

## SUMMARY

This application provides a circuit breaker and a power supply system, to implement breaking fast.
According to a first aspect, an embodiment of this application provides a circuit breaker. The circuit breaker is disposed between a direct current power source and a load, the circuit breaker includes a first coil, a second coil, a switch unit, and a driver, and the switch unit and the driver form a linkage connection. The direct current power source is coupled to a first end of the first coil and a first end of the second coil, both a second end of the first coil and a second end of the second coil are coupled to one end of the switch unit, and another end of the switch unit is coupled to the load. During specific implementation, inductive reactance of the first coil is less than inductive reactance of the second coil. When a current growth rate of the first coil is greater than a preset threshold, the first coil may generate a magnetic field, and the driver drives, under induction of the magnetic field, the switch unit to be turned off. In this embodiment of this application, the circuit breaker uses a different structure, moves the driver from a near position of the coil to a far position by using a repulsion force between a magnetic field generated by a coil and the driver, and drives the switch unit to implement breaking, so that a breaking speed is fast, and a switch in the circuit breaker has a long service life and good reliability.
With reference to the first aspect, in a first possible implementation, direct current impedance of the first coil is greater than direct current impedance of the second coil. In this embodiment of this application, the direct current impedance of the second coil is configured to be small, so that power consumption of the power supply system can be reduced.
With reference to the first aspect or with reference to the first possible implementation of the first aspect, in a second possible implementation, the first coil includes a spiral coil. The driver is disposed at a position at which a magnetic induction line of a magnetic field generated by the spiral coil is cut, and a plane in which the driver is located is parallel to a plane in which the spiral coil is located.
With reference to the first aspect or with reference to the first possible implementation of the first aspect, in a third possible implementation, the first coil includes a spring coil. The driver is disposed at a position at which a magnetic induction line of a magnetic field generated by the spring coil is cut, and a plane in which the driver is located is perpendicular to an axial direction of the spring coil.
With reference to the second possible implementation of the first aspect or the third possible implementation of the first aspect, in a fourth possible implementation, the circuit breaker further includes a buckle, and the buckle may fix a position of the driver after the driver drives the switch unit to be turned off.
With reference to the fourth possible implementation of the first aspect, in a fifth possible implementation, when the current growth rate of the first coil is greater than the preset threshold, the first coil generates the magnetic field, so that the driver moves in a direction away from the first coil; and the buckle is disposed within a range of a moving path of the driver.
With reference to any one of the first aspect or the possible implementations of the first aspect, in a sixth possible implementation, the switch unit includes a first switch subunit and a second switch subunit, and the first switch subunit and the driver form a linkage connection; when the current growth rate of the first coil is greater than the preset threshold, the first coil may generate the magnetic field, and the driver drives, under induction of the magnetic field, the first switch subunit to be turned off; and the second switch subunit is connected in parallel to the first switch subunit, and the second switch subunit may be connected when the first switch subunit is turned off, to perform arc extinguishing on the first switch subunit.
With reference to the sixth possible implementation of the first aspect, in a seventh possible implementation, the second switch subunit includes a first switching transistor, a first end of the first switching transistor is coupled to the second end of the first coil and the second end of the second coil, and a second end of the first switching transistor is coupled to the load. In this embodiment of this application, not only safe breaking of a mechanical switch can be ensured, but also a breaking speed of the circuit breaker can be ensured, so that security is high, and reliability is good.
With reference to the seventh possible implementation of the first aspect, in an eighth possible implementation, the second switch subunit further includes a first diode, a second diode, a third diode, and a fourth diode, where both an anode of the first diode and a cathode of the third diode are coupled to the second end of the first coil and the second end of the second coil, a cathode of the first diode and a cathode of the second diode are coupled to the first end of the first switching transistor; an anode of the third diode and an anode of the fourth diode are coupled to the second end of the first switching transistor; and both an anode of the second diode and a cathode of the fourth diode are coupled to the load.

With reference to the sixth possible implementation of the first aspect to the eighth possible implementation of the first aspect, in a ninth possible implementation, the circuit breaker further includes an energy absorption unit, the energy absorption unit is connected in parallel to two ends of the second switch subunit, and may clamp voltages at the two ends of the second switch subunit when the second switch subunit is turned off.

According to a second aspect, an embodiment of this application provides a power supply system. The power supply system includes a direct current power source, a load, and the circuit breaker according to any one of the first aspect or the possible implementations of the first aspect. The circuit breaker may disconnect the direct current power source from the load when a short circuit occurs in the power supply system.

It should be understood that implementation and beneficial effects of the foregoing aspects of this application may be referred to each other.

## BRIEF DESCRIPTION OF DRAWINGS

FIG. 1 is a schematic diagram of a structure of a circuit breaker in the conventional technology;
FIG. 2 is a block diagram of a structure of a power supply system according to an embodiment of this application;
FIG. 3 is a schematic diagram of a structure of a circuit breaker according to an embodiment of this application;
FIG. 4 is a circuit diagram of a circuit breaker according to an embodiment of this application;
FIG. 5 is a schematic diagram of a current when a short circuit occurs in a circuit breaker according to an embodiment of this application;
FIG. 6 is another circuit diagram of a circuit breaker according to an embodiment of this application;
FIG. 7A and FIG. 7B are schematic diagrams of positions of a spiral coil and a driver according to an embodiment of this application; and
FIG. 8A and FIG. 8B are schematic diagrams of positions of a spring coil and a driver according to an embodiment of this application.

## DESCRIPTION OF EMBODIMENTS

The following clearly and completely describes technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The following further describes embodiments of this application in detail with reference to the accompanying drawings.

FIG. 2 is a block diagram of a structure of a power supply system according to an embodiment of this application. As shown in FIG. 2, the power supply system includes a direct current power source 21, a circuit breaker 22, and a load 23. An output end of the direct current power source 21 is coupled to one end of the circuit breaker 22, and the other end of the circuit breaker 22 is coupled to the load 23.

It should be noted that "coupling" described in this application indicates a direct or indirect connection. For example, coupling between A and B may be a direct connection between A and B, or may be an indirect connection between A and B by using one or more other electronic components. For example, A is directly connected to C, and C is directly connected to B, so that A is connected to B by using C.

The direct current power source 21 may be, for example, a power battery (for example, a nickel-cadmium battery, a nickel-hydrogen battery, a lithium-ion battery, or a lithium polymer battery) or a battery. Optionally, the direct current power source 21 may be further configured to couple an upper-level circuit, for example, an AC/DC converter (Alternating Current/Direct-Current converter) or another DC/DC converter (for example, a BUCK converter, a BOOST converter, or a BUCK-BOOST converter), or the like. In other words, the direct current power source 21 may be a direct power source, or may be an indirect power source transmitted through a circuit.

The load 23 may be, for example, a photovoltaic inverter, an electric vehicle, another DC/DC converter, or a DC/AC converter (Direct-Current/Alternating Current converter), or the like.

The circuit breaker 22 may disconnect the direct current power source 21 from the load 23 when a short circuit occurs in the power supply system. In this embodiment of this application, the circuit breaker 22 uses a different structure, moves the driver from a near position of a coil to a far position based on a repulsion force between a magnetic field generated by the coil and the driver, and drives the switch unit to implement breaking, so that a breaking speed is fast, and a switch in the circuit breaker has a long service life and good reliability.

The following describes a specific structure of the circuit breaker with reference to the accompanying drawings.

FIG. 3 is a schematic diagram of a structure of a circuit breaker according to an embodiment of this application. As shown in FIG. 3, the circuit breaker 32 is disposed between a direct current power source 31 and a load 33, and the circuit breaker 32 includes a first coil 321, a second coil 322, a switch unit 323, and a driver 324. The direct current power source 31 is coupled to a first end of the first coil 321 and a first end of the second coil 322, both a second end of the first coil 321 and a second end of the second coil 322 are coupled to one end of the switch unit 323, and another end of the switch unit 323 is coupled to the load 33.

Inductive reactance of the first coil 321 is less than inductive reactance of the second coil 322. For example, the first coil may have an iron core, and the iron core is configured to increase inductance of the first coil, so that the inductive reactance of the first coil is less than that of the second coil.

The switch unit 323 may include a mechanical switch, for example, a micro switch, where the micro switch acts on an action part (for example, an action spring plate or an action lever) through an external mechanical force, so that the action part is connected to or disconnected from a fixed contact of the micro switch. The external mechanical force of the micro switch comes from the driver 324 that has a linkage connection relationship with the micro switch.

The driver 324 may be a metal conductor, for example, a closed ring or plate made of copper, aluminum, or the like. Further, the driver 324 may alternatively be a magnetic conductor, for example, a magnetic disk.

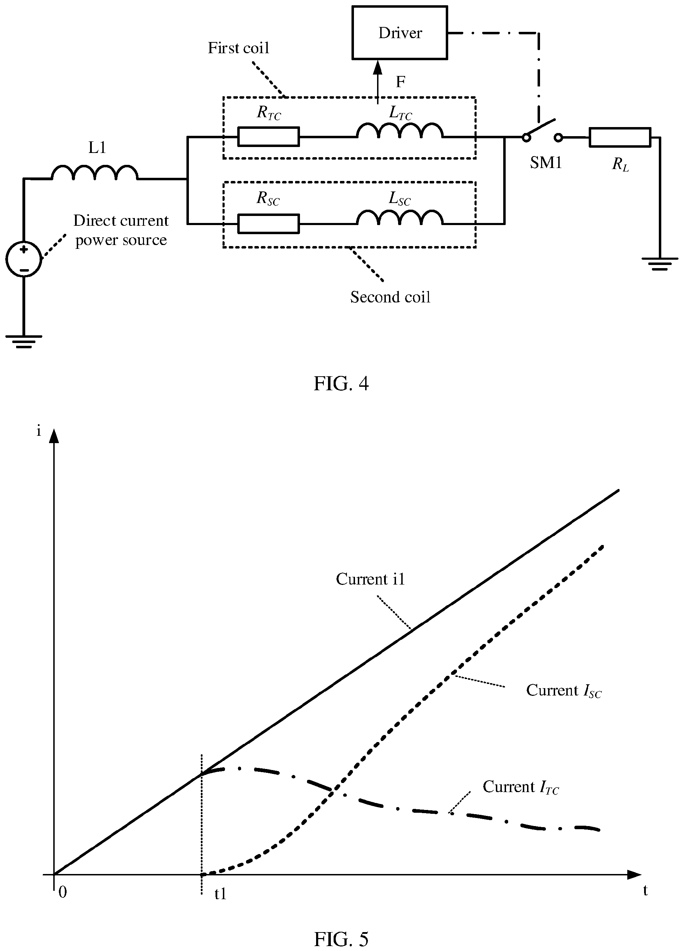

The following describes, with reference to FIG. 4, how a driver applies a mechanical force to a switch unit. FIG. 4 is a circuit diagram of a circuit breaker according to an embodiment of this application. As shown in FIG. 4, a first coil may be equivalent to a resistor $R_{TC}$ and an inductor $L_{TC}$ connected in series, and a second coil may be equivalent to a resistor $R_{SC}$ and an inductor $L_{SC}$ connected in series. It may be understood that, during specific implementation, the first coil and the second coil are separately presented as a conductor winding. FIG. 4 shows an electrical equivalent for facilitating analysis of a current change in the circuit breaker.

For example, a direct current power source may be coupled to the circuit breaker through an inductor L1. In other words, the direct current power source is coupled to one end of the inductor L1, and the other end of the inductor L1 is coupled to a first end of the first coil and a first end of the second coil. Both a second end of the first coil and a second end of the second coil are coupled to one end of a switch unit (for example, a switch SM1), and the other end of the switch SM1 is coupled to a load (for example, a resistor $R_L$). The inductor L1 may filter an output voltage of the direct current power source.

In some feasible implementations, inductive reactance of the first coil is less than inductive reactance of the second coil, that is, it may be understood as $L_{TC}$

< $L_{SC}$. Optionally, a value relationship between the inductive reactance of the first coil and the inductive reactance of the second coil may be specifically expressed as follows:

$$L_{SC} = \alpha L_{TC} \qquad \text{Formula 1}$$

$\alpha$ is a natural number greater than 1, and a value of $\alpha$ is related to a specific application of the circuit breaker, for example, related to a power supply current of a power supply system in which the circuit breaker is located, a distance between a driver and the first coil, and the like.

Further, in some feasible embodiments, that direct current impedance of the first coil is greater than direct current impedance of the second coil may be understood as $R_{TC} > R_{SC}$. However, it should be noted that a resistance value of the resistor $R_{TC}$ is far greater than a resistance value of the resistor $R_{SC}$. When the direct current power source outputs a direct current, and the switch SM1 is closed, the direct current mainly flows through a branch in which the resistor $R_{SC}$ is located, that is, the direct current mainly flows through the second coil. For example, the direct current output by the direct current power source is 10 A. Because a direct current resistance value of the resistor $R_{SC}$ is small, and a blocking capability to the direct current is small, in this case, a magnitude of a current flowing through the second coil may reach 9.999 A. In this embodiment of this application, the direct current impedance of the second coil is configured to be small, so that power consumption of the power supply system can be reduced.

However, when a short circuit occurs in the power supply system in which the circuit breaker is located, a current change of the circuit breaker is shown in FIG. 5. It should be noted that a horizontal coordinate (time t) in FIG. 5 is at a microsecond $\mu$s level, and a current i1 may be understood as a current on a series branch of the power supply system in which the circuit breaker is located (that is, a current at a parallel connection point of the first coil and the second coil). A current $I_{TC}$ may be understood as a current of the first coil, and a current $I_{SC}$ may be understood as a current of the second coil. A sum of the current $I_{TC}$ and the current $I_{SC}$ is the current i1.

When a short circuit occurs in the power supply system in which the circuit breaker is located, for example, a direct current power source short circuit or a load short circuit occurs, the current i1 increases rapidly. Because the inductive reactance of the second coil is greater than the inductive reactance of the first coil, that is, a blocking capability of the inductor $L_{SC}$ to the current i1 increases rapidly, it can be learned from FIG. 5 that, before a moment t1, the current i1 is almost equal to the current $I_{TC}$, that is, it may be understood as a current of the circuit breaker is transferred from the second coil to the first coil when a short circuit occurs in the power supply system, and the current of the first coil continuously increases. For the first coil, when a growth rate of a current flowing through the first coil is greater than a preset threshold, in a case in which the current of the first coil changes, the first coil generates a magnetic field from electricity, to generate a first magnetic field. In addition, the driver is disposed at a position at which a magnetic induction line of the first magnetic field is cut. According to the Lenz law, the driver generates electricity from the magnetic field, and obtains a current by induction. The current further generates a second magnetic field. A direction of the second magnetic field is opposite to a direction of the first magnetic field generated by the first coil, which blocks enhancement of the first magnetic field. In this case, the first coil generates a repulsion force on the driver, and drives the driver to move in a direction away from the first coil, to drive the switch SM1 to be turned off.

It should be noted that the preset threshold is a device attribute of the first coil, is related to a quantity of turns of the first coil, whether the first coil has an iron core, and the like, and may be used to measure sensitivity of the first coil to a current change of the first coil. A smaller preset threshold indicates higher sensitivity of the first coil to the current change of the first coil. For example, the first coil has an iron core. When a current growth rate of the first coil is greater than a first preset threshold, a repulsion force generated by strength of the first magnetic field generated by the first coil on the driver may drive the switch SM1 to be turned off in a first time period. For another example, the first coil does not have an iron core, or has a small iron core. When the current growth rate of the first coil is greater than a second preset threshold, the repulsion force generated by strength of the first magnetic field generated by the first coil on the driver may drive the switch SM1 to be turned off in a second time period. The first time period may be less than the second time period, and the first preset threshold may also be less than the second preset threshold. In other words, the first coil having an iron core is more sensitive to the current change of the first coil, and can generate a magnetic field with a larger magnetic field strength in a shorter time, to fast turn off the switch SM1, thereby avoiding generation of an electric arc. Therefore, in this embodiment of this application, first coils having different turn quantities or coils whether having an iron core may be selected. Different first coils correspond to different preset thresholds. This is not limited in this embodiment of this application.

However, as the driver moves away from the first coil, a blocking capability of the driver to enhancement of the first magnetic field becomes weak, magnetic induction intensity of the first coil increases (that is, inductance increases), and the inductive reactance of the first coil increases to be greater than the inductive reactance of the second coil at the moment t1, that is, $L_{TC} > L_{SC}$. After the moment t1, the current $I_{TC}$ decreases (that is, the current of the first coil decreases), and the current $I_{SC}$ increases (that is, the current of the second coil increases), that is, the current of the circuit breaker is partially transferred to the second coil. Because the current of the first coil decreases, the repulsion force of the first coil on the driver also decreases.

In conclusion, according to the circuit breaker provided in this embodiment of this application, when a short circuit occurs in the power supply system, a change of a current is: before the moment t1, it may be understood as that all current of the power supply system flows through the first coil, and the first coil may induce a growth rate of the current and generate a magnetic field. In this case, the first coil generates a repulsion force on the driver. After the moment t1, it may be understood that the current of the power supply system flows through the first coil and the second coil separately, and the current of the first coil decreases, and still generates a repulsion force on the driver. However, the repulsion force generated in this case decreases as the current of the first coil decreases and a distance between the driver and the first coil increases. The driver moves in the direction away from the first coil due to the repulsion force, to drive the switch SM1 to be turned off. At an instant of a short circuit occurs in the power supply system, an initial distance between the driver and the first coil is short, the first coil has a large repulsion force on the driver, the driver has a large acceleration, and a speed of driving the switch SM1 to be turned off is fast. Compared with the conventional technology in which an armature is attracted from a far place of the coil to a near place by using an attraction force to implement breaking, in this embodiment of this application, the driver is moved from a near place of a coil to a far place by using the repulsion force to implement breaking. In other words, initially, a repulsion force of the coil on the driver may be large, and breaking can be fast implemented.

In some feasible implementations, the switch SM1 may be completely turned off before the moment t1. After the moment t1, the repulsion force on the driver decreases, and a moving acceleration also decreases. For example, in this embodiment of this application, the circuit breaker may dispose a buckle within a moving path range of the driver, and the buckle may fix a position of the driver after the driver drives the switch SM1 to be turned off. In this embodiment of this application, as the repulsion force on the driver decreases, the moving acceleration decreases, so that an impact force of the driver on the buckle greatly decreases, to avoid irreversible damage to the fastener, and prolong a service life of the circuit breaker.

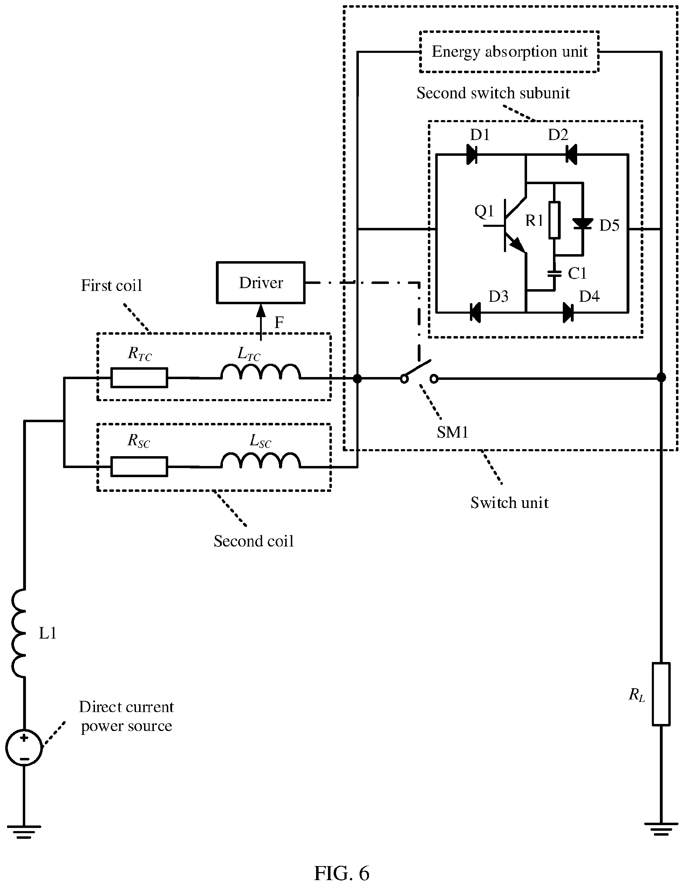

Further, in some feasible implementations, refer to FIG. 6. FIG. 6 is another circuit diagram of a circuit breaker according to an embodiment of this application. A difference between the circuit diagram of the circuit breaker shown in FIG. 6 and the circuit diagram of the circuit breaker shown in FIG. 4 lies in that, in addition to the first switch subunit (for example, the switch SM1), the switch unit in FIG. 6 further includes a second switch subunit. During specific implementation, a driver specifically and the switch SM1 form a linkage connection. When a current growth rate of a first coil is greater than a preset threshold, the first coil generates a magnetic field, and the driver drives, under induction of the magnetic field, the switch SM1 to be turned off.

The second switch subunit is connected in parallel to the switch SM1, and the second switch subunit may be connected when the switch SM1 is turned off, to perform arc extinguishing on the switch SM1. In some feasible implementations, the second switch subunit may specifically include a first switching transistor. In FIG. 6, that the first switching transistor is an insulated gate bipolar transistor IGBT is used as an example. A first end (that is, a collector of an IGBT Q1) of the first switching transistor is coupled to a second end of the first coil and a second end of a second coil, and a second end (that is, an emitter of the IGBT Q1) of the first switching transistor is coupled to a load (for example, a resistor $R_L$). Optionally, a third end (that is, a gate of the IGBT Q1) of the first switching transistor may be coupled to a controller. The controller controls connection and disconnection between the collector and the emitter of the IGBT Q1 by controlling a voltage output to the gate of the IGBT Q1. For example, the controller outputs a high level (for example, 3.3 V) to the gate of the IGBT Q1, and the collector and the emitter of the IGBT Q1 are connected. For another example, the controller outputs a low level (for example, 0 V) to the gate of the IGBT Q1, and the collector and the emitter of the IGBT Q1 are disconnected. Alternatively, the gate of the IGBT Q1 may be coupled to a direct current power source through a device, for example, a resistor or an inductor. When a short circuit occurs in the direct current power source, a large current is transmitted to the gate of the IGBT Q1, so that the collector and the emitter of the IGBT Q1 are connected. In this embodiment of this application, a semiconductor switch is added. When a power supply system works normally, because the semiconductor switch (for example, impedance of the IGBT Q1 is at a milliohm (mΩ) level) is greater than a mechanical switch (for example, impedance of the switch SM1 is at a micro-ohm (μΩ) level), the IGBT Q1 is disconnected, and a current output by the direct current power source flows through the switch SM1. However, when the switch SM1 is to be turned off, because the current changes instantaneously, the switch SM1 generates an electric arc. Therefore, when the switch SM1 is turned off, the IGBT Q1 is connected. In this way, the current can be transferred to the IGBT Q1, so that the switch SM1 can be safely turned off. After the switch SM1 is safely turned off, the IGBT Q1 is disconnected. Because a disconnection response of the IGBT Q1 is very fast (at nanosecond (ns) level), this embodiment of this application can ensure that the mechanical switch breaks safely, and can also ensure a breaking speed of the circuit breaker, thereby having high security, and good reliability.

Optionally, a resistor R1 and a capacitor C1 may be connected in series between the collector of the IGBT Q1 and the emitter of the IGBT Q1. One end of the resistor R1 is coupled to the collector of the IGBT Q1, the other end of the resistor R1 is coupled to one end of the capacitor C1, and the other end of the capacitor C1 is coupled to the emitter of the IGBT Q1. To be specific, the resistor R1 is coupled to the capacitor C1 in series, so that a peak pulse between the collector and the emitter of the IGBT Q1 can be reduced at a moment when the IGBT Q1 is disconnected. Further, a fifth diode D5 may also be connected in parallel at two ends of the resistor R1, where an anode of the fifth diode D5 is coupled to one end of the resistor R1, and a cathode of the fifth diode D5 is coupled to the other end of the resistor R1. At the moment when the IGBT Q1 is disconnected, a current of the power supply system flows through the fifth diode D5 to charge the capacitor C1, and a response is fast, to avoid overvoltage between the collector and the emitter of the IGBT Q1.

Further, in some feasible implementations, the second switch subunit shown in FIG. 6 further includes a rectifier bridge (for example, a first diode D1, a second diode D2, a third diode D3, and a fourth diode D4). An anode of the first diode D1 and a cathode of the third diode D3 are coupled to the second end of the first coil and the second end of the second coil, a cathode of the first diode D1 and a cathode of the second diode D2 are coupled to the first end (for example, the collector of the IGBT Q1) of the first switching transistor, an anode of the third diode D3 and an anode of the fourth diode D4 are coupled to the second end (for example, the emitter of the IGBT Q1) of the first switching transistor, and both an anode of the second diode D2 and a cathode of the fourth diode D4 are coupled to the load (for example, the resistor $R_L$). The four diodes in this embodiment of this application may rectify an input current (that is, an output current of the first coil and/or the second coil) of the second switch subunit.

Optionally, in some feasible implementations, an energy absorption unit is connected in parallel to two ends of the second switch subunit. The energy absorption unit may be specifically a metal oxide varistor. When the second switch subunit is turned off, voltages at the two ends of the second switch subunit are clamped. For specific implementation, refer to a principle of a metal oxide varistor in the conventional technology. Details are not described herein again.

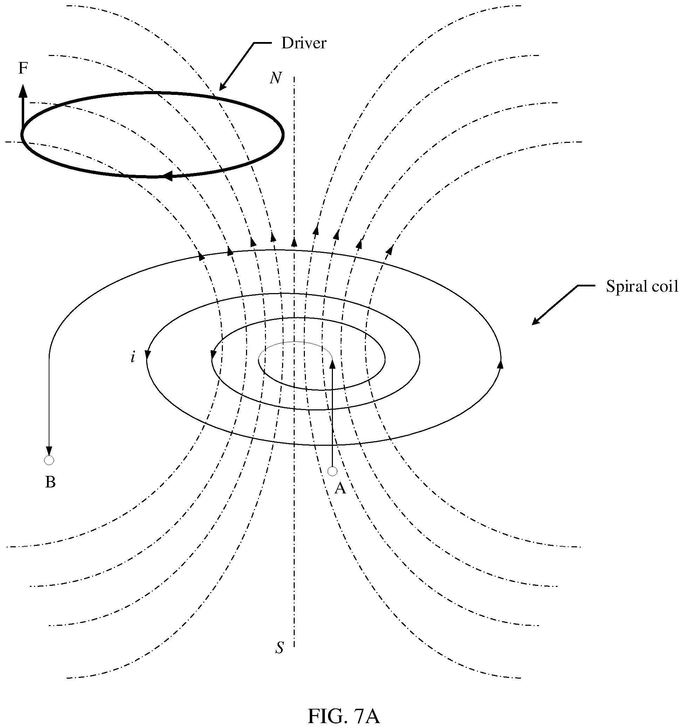

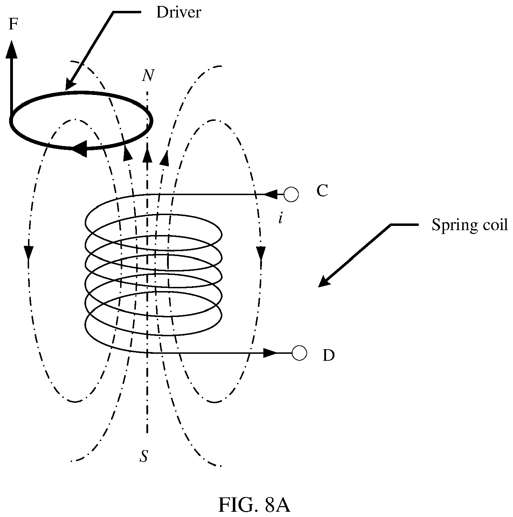

The following describes, with reference to FIG. 7A to FIG. 8B, a relative position between a first coil and a driver in embodiments of this application as an example.

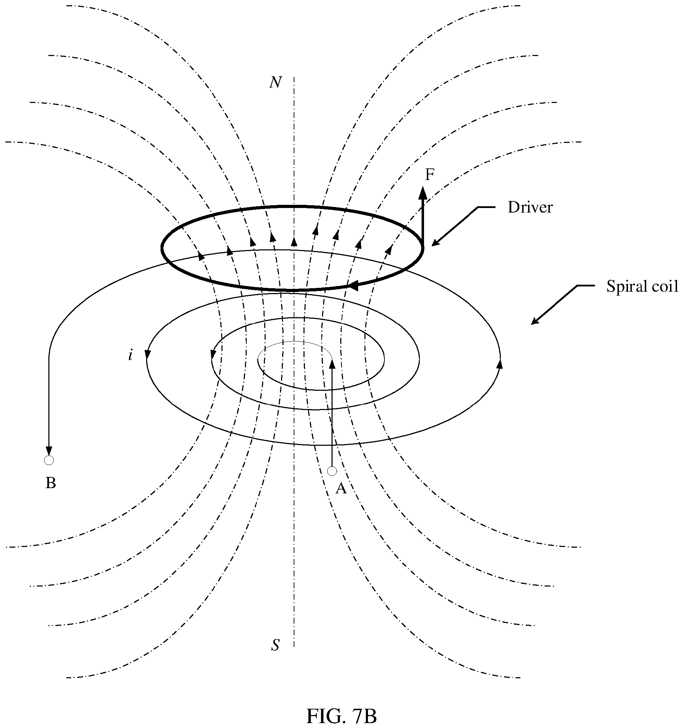

In some feasible implementations, refer to FIG. 7A. FIG. 7A is a schematic diagram of positions of a spiral coil and a driver according to an embodiment of this application. As shown in FIG. 7A, a first coil is a spiral coil, and a plane on which the driver is located is parallel to a plane on which the spiral coil is located. For example, a first end of the first coil is a central winding A of the spiral coil, and a second end of the first coil is an outermost side B of the spiral coil. An output current of a direct current power source flows from A to B, that is, a current direction of the spiral coil is a counter clockwise direction. According to a right-hand spiral rule, a direction of a magnetic field generated by the spiral coil in FIG. 7A is an N pole direction shown in FIG. 7A. The driver is disposed at a position at which a magnetic induction line of the magnetic field generated by the spiral coil is cut. For example, in FIG. 7A, a position of the driver is disposed. The magnetic induction line of the magnetic field generated by the spiral coil passes through the driver along an N pole direction of the magnetic induction line. According to the Lenz law, the magnetic induction line induces a clockwise current in the driver. The driver induces the current, and a direction of a generated magnetic field is opposite to the direction of the magnetic field generated by the spiral coil. In this case, the driver is mutually exclusive with the spiral coil, the driver is subject to a repulsion force of the magnetic field generated by the spiral coil, and a direction is perpendicular upward (that is, the N pole direction of the magnetic induction line of the magnetic field generated by the spiral coil). The driver moves upward and drives a switch unit to be turned off. Optionally, the driver may further be disposed at a position shown in FIG. 7B. A center of the driver in FIG. 7B is on a spiral axis of the spiral coil, and a plane in which the driver is located is parallel to the plane in which the spiral coil is located. In FIG. 7B, density passing through the driver is high, and the induced current is also large. In this case, the driver in FIG. 7B is subject to a greater repulsion force than that in FIG. 7A, and breaking is implemented faster. Certainly, the driver provided in this embodiment of this application may also be disposed on an S pole side of the spiral coil, and may be understood as being center-symmetric (not shown in the figure) to the driver in FIG. 7A or FIG. 7B with respect to the spiral coil.

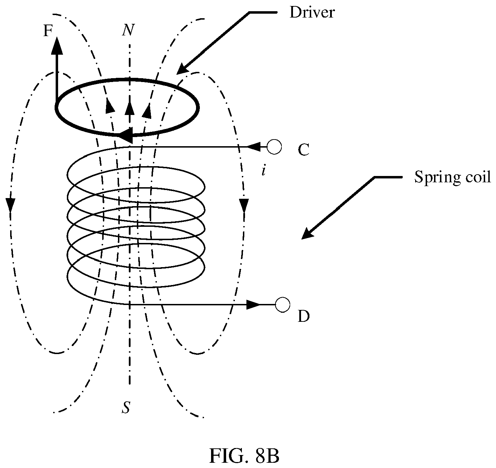

Optionally, in some feasible implementations, refer to FIG. 8A. FIG. 8A is a schematic diagram of positions of a spring coil and a driver according to an embodiment of this application. As shown in FIG. 8A, a first coil is a spring coil, and a plane in which the driver is located is perpendicular to an axial direction of the spring coil. For example, a first end of the first coil is a winding C of the spring coil, and a second end of the first coil is a winding D of the spring coil. An output current of a direct current power source flows from C to D. According to a right-hand spiral rule, a direction of a magnetic field generated by the spring coil in FIG. 8A is an N pole direction shown in FIG. 8A, and the driver is disposed at a position at which a magnetic induction line of the magnetic field generated by the spring coil is cut. A position of the driver disposed in FIG. 8A is used as an example. The magnetic induction line of the magnetic field generated by a spring coil passes through the driver along an N pole direction of the magnetic induction line. According to the Lenz law, the magnetic induction line induces a clockwise current in the driver. A direction of a magnetic field generated by the current induced by the driver is opposite to the direction of the magnetic field generated by the spring coil. In this case, the driver is mutually exclusive with the spring coil, the driver is subject to a repulsion force of the magnetic field generated by the spring coil, and a direction is perpendicular upward (that is, the N pole direction of the magnetic induction line of the magnetic field generated by the spring coil). The driver moves upward and drives a switch unit to be turned off. Similarly, the driver may further be disposed at a position shown in FIG. 8B. A center of the driver in FIG. 8B is on a central axis of the spring coil, and a plane in which the driver is located is perpendicular to the axial direction of the spring coil. In FIG. 8B, density passing through the driver is high, and the induced current is also large. In this case, the driver in FIG. 8B is subject to a large repulsion force, and breaking is implemented faster. Similarly, the driver provided in this embodiment of this application may also be disposed on an S pole side of the spring coil, and may be understood as being center-symmetric (not shown in the figure) to the driver in FIG. 8A or FIG. 8B with respect to the spring coil.

It may be understood that FIG. 7A to FIG. 8B specifically present positions of the driver, and merely describe an example in which the driver cuts a magnetic induction line of a magnetic field generated by the spiral coil, and it should not be understood as a limitation on the positions of the driver. In addition, FIG. 7A to FIG. 8B merely describe an example in which a shape of the driver is a ring, and it should not be understood as a limitation on the shape of the driver. For example, the driver may be a conductor of a closed shape such as a square or a rectangle.

For example, the first coil (for example, the spiral coil or the spring coil) provided in this embodiment of this application and the driver may be packaged into a product, and specifically presented as a component, and are manufactured by a same manufacturer. Alternatively, the first coil (for example, the spiral coil or the spring coil) provided in this embodiment of this application and the driver may be separately presented as two components. A specific presentation form of the first coil and the driver is not limited in this application.

It should be noted that the terms "first" and "second" are merely intended for a purpose of description, and shall not be understood as an indication or implication of relative importance.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A circuit breaker, wherein the circuit breaker is disposed between a direct current power source and a load, the circuit breaker comprises a first coil, a second coil, a switch unit, and a driver, and the switch unit and the driver form a linkage connection;

    the direct current power source is coupled to a first end of the first coil and a first end of the second coil, both a second end of the first coil and a second end of the second coil are coupled to one end of the switch unit, and another end of the switch unit is coupled to the load; and inductive reactance of the first coil is less than inductive reactance of the second coil; and when a current growth rate of the first coil is greater than a preset threshold, the first coil generates a magnetic field, and the driver drives, under induction of the magnetic field, the switch unit to be turned off.

2. The circuit breaker according to claim 1, wherein direct current impedance of the first coil is greater than direct current impedance of the second coil.

3. The circuit breaker according to claim 1 or 2, wherein the first coil comprises a spiral coil; and the driver is disposed at a position at which a magnetic induction line of a magnetic field generated by the spiral coil is cut, and a plane in which the driver is located is parallel to a plane in which the spiral coil is located.

4. The circuit breaker according to claim 1 or 2, wherein the first coil comprises a spring coil; and the driver is disposed at a position at which a magnetic induction line of a magnetic field generated by the spring coil is cut, and a plane in which the driver is located is perpendicular to an axial direction of the spring coil.

5. The circuit breaker according to claim 3 or 4, wherein the circuit breaker further comprises a buckle, and the buckle is configured to fix a position of the driver after the driver drives the switch unit to be turned off.

6. The circuit breaker according to claim 5, wherein when the current growth rate of the first coil is greater than the preset threshold, the first coil generates the magnetic field, so that the driver moves in a direction away from the first coil; and the buckle is disposed within a range of a moving path of the driver.

7. The circuit breaker according to any one of claims 1 to 6, wherein the switch unit comprises a first switch subunit and a second switch subunit, and the first switch subunit and the driver form a linkage connection; and when the current growth rate of the first coil is greater than the preset threshold, the first coil generates the magnetic field, and the driver drives, under induction of the magnetic field, the first switch subunit to be turned off; and the second switch subunit is connected in parallel to the first switch subunit, and the second switch subunit is configured to be connected when the first switch subunit is turned off, to perform arc extinguishing on the first switch subunit.

8. The circuit breaker according to claim 7, wherein the second switch subunit comprises a first switching transistor, a first end of the first switching transistor is coupled to the second end of the first coil and the second end of the second coil, and a second end of the first switching transistor is coupled to the load.

9. The circuit breaker according to claim 8, wherein the second switch subunit further comprises a first diode, a second diode, a third diode, and a fourth diode;

    both an anode of the first diode and a cathode of the third diode are coupled to the second end of the first coil and the second end of the second coil; a cathode of the first diode and a cathode of the second diode are coupled to the first end of the first switching transistor, and an anode of the third diode and an anode of the fourth diode are coupled to the second end of the first switching transistor; and both an anode of the second diode and a cathode of the fourth diode are coupled to the load.

10. The circuit breaker according to any one of claims 7 to 9, wherein the circuit breaker further comprises an energy absorption unit, and the energy absorption unit is connected in parallel to two ends of the second switch subunit, and is configured to clamp voltages at the two ends of the second switch subunit when the second switch subunit is turned off.

11. A power supply system, wherein the power supply system comprises a direct current power source, a load, and the circuit breaker according to any one of claims 1 to 10, and the circuit breaker is configured to disconnect the direct current power source from the load when a short circuit occurs in the power supply system.

FIG. 1

FIG. 2

FIG. 3

FIG. 4

FIG. 5

FIG. 6

FIG. 7A

FIG. 7B

FIG. 8A

FIG. 8B

## INTERNATIONAL SEARCH REPORT

International application No.

**PCT/CN2021/102738**

### A. CLASSIFICATION OF SUBJECT MATTER

H02H 3/08(2006.01)i; H01H 33/42(2006.01)i

According to International Patent Classification (IPC) or to both national classification and IPC

### B. FIELDS SEARCHED

Minimum documentation searched (classification system followed by classification symbols)

H01H; H02H

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI: 断路器, 线圈, 多个, 第一, 第二, 驱动, 开关, 磁场, 磁体, 阀值; circuit breaker, coil, winding, multi, first, second, drive, switch, magnetic field, magnet, threshold value

### C. DOCUMENTS CONSIDERED TO BE RELEVANT

| Category* | Citation of document, with indication, where appropriate, of the relevant passages | Relevant to claim No. |
|---|---|---|
| X | US 5369542 A (SIEMENS ENERGY & AUTOMAT) 29 November 1994 (1994-11-29) description, column 2, line 58 - column 5, line 22, and figures 1-2 | 1-11 |
| A | CN 203800568 U (HUAZHONG UNIVERSITY OF SCIENCE AND TECHNOLOGY) 27 August 2014 (2014-08-27) entire document | 1-11 |
| A | CN 107342754 A (SHANGHAI JIAO TONG UNIVERSITY) 10 November 2017 (2017-11-10) entire document | 1-11 |
| A | WO 2014023326 A1 (SIEMENS AG et al.) 13 February 2014 (2014-02-13) entire document | 1-11 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 March 2022** | **14 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| US | 5369542 | A | 29 November 1994 | None | | | |
| CN | 203800568 | U | 27 August 2014 | None | | | |
| CN | 107342754 | A | 10 November 2017 | CN | 107342754 | B | 14 July 2020 |
| WO | 2014023326 | A1 | 13 February 2014 | EP | 2864995 | A1 | 29 April 2015 |
| | | | | EP | 2864995 | B1 | 27 July 2016 |

International application No.

**PCT/CN2021/102738**

Form PCT/ISA/210 (patent family annex) (January 2015)